(19) Europäisches Patentamt

European Patent Office

Office européen des brevets

(11) **EP 1 031 441 B1**

(12) **EUROPÄISCHE PATENTSCHRIFT**

(45) Veröffentlichungstag und Bekanntmachung des Hinweises auf die Patenterteilung:
**04.08.2004 Patentblatt 2004/32**

(51) Int Cl.⁷: **B60C 11/04**, B60C 11/00, B60C 9/18, B60C 1/00, B60C 11/01

(21) Anmeldenummer: **99123387.5**

(22) Anmeldetag: **24.11.1999**

(54) **Fahrzeugluftreifen**

Vehicle tyre

Bandage pneumatique pour véhicule

(84) Benannte Vertragsstaaten:
**AT BE CH CY DE DK ES FI FR GB GR IE IT LI LU MC NL PT SE**

(30) Priorität: **25.02.1999 DE 19908122**

(43) Veröffentlichungstag der Anmeldung:
**30.08.2000 Patentblatt 2000/35**

(73) Patentinhaber: **Continental Aktiengesellschaft 30165 Hannover (DE)**

(72) Erfinder:
• **Beckmann, Otto Dr.**
  **30169 Hannover (DE)**
• **Kreuser, Helmut Dr.**
  **4623 Magnèe (BE)**
• **Topp, Andreas Dr.**
  **30163 Hannover (DE)**
• **Becker, Axel Dr.**
  **30938 Burgwedel (DE)**

(56) Entgegenhaltungen:
**EP-A- 0 209 125** **EP-A- 0 232 242**

**Beschreibung**

Die Erfindung betrifft einen Fahrzeugluftreifen mit zumindest einer luftundurchlässigen Innenschicht, einer Festigkeitsträger enthaltenden gummierten Karkasse, die vom Zenitbereich des Fahrzeugluftreifens über die Seitenwände bis in den Wulstbereich reicht und dort durch Umschlingen zugfester Wulstkerne verankert ist, einem radial außen befindlichen Profilrillen aufweisenden Gummilaufstreifen, einer Gürtelverstärkung mit zumindest einer zwischen dem Gummilaufstreifen und der Karkasse befindlichen Gürtellage, die gummierte Festigkeitsträger enthält, und weiteren üblichen Bestandteilen von Fahrzeugluftreifen wie z. B. Bandagen.

Die Gummimischungen von Laufstreifen herkömmlicher Fahrzeugluftreifen besitzen aufgrund ihrer gewünschten Eigenschaften im Hinblick auf optimale Fahreigenschaften wie Rollwiderstand und Naßrutschverhalten speziell hierauf abgestimmte Zusammensetzungen. Diese für die optimalen Fahreigenschaften verwendeten Gummimischungen weisen im allgemeinen eine schlechte thermische Leitfähigkeit auf, so daß die beim Gebrauch des Reifens durch Flieh- und Walkkräfte erzeugte thermische Energie sehr schlecht verteilt und an die Umgebung abgeführt werden kann. Damit einher geht eine Wärmeentwicklung im Reifen, die vor allem zu einer Beeinträchtigung der Reifenhaltbarkeit führt. Dem Fachmann ist bekannt, daß sich durch die Verwendung von Mischungszusammensetzungen, die Kieselsäure und Silan enthalten, die Wärmeentwicklung reduzieren läßt. Allerdings besitzen solche Gummimischungen mit Kieselsäure-Silan-System noch schlechtere Wärmeleitfähigkeiten als herkömmliche Mischungen mit Ruß als Füllstoff.

Die durch Walk- und Fliehkräfte hervorgerufenen Temperaturerhöhungen in Teilbereichen des Reifens sind neben der Stärke der wirkenden Kräfte auch abhängig von der Dicke des Reifenbereichs und von der Unterschiedlichkeit in den Steifigkeiten der aneinandergrenzenden Bereiche. So treten zum Beispiel im Wulst- und Seitenwandbereich im Zusammenspiel mit der Felge starke Walkkräfte auf, die durch die unterschiedlichen Steifigkeiten der im Wulst- und Seitenwandbereich verwendeten Materialien (Karkasse, Wulstumwicklung, usw.) noch verstärkt werden. Besonders stark macht sich die Temperaturerhöhung durch schlechte Wärmeableitung an der Gürtelverstärkung und dort speziell an den Gürtelkanten bemerkbar. Die Gürtelverstärkung besteht dabei aus den eigentlichen Gürtellagen und gegebenenfalls radial außen davon angeordneten Bandagenlagen. Bei den Gürtellagen handelt es sich üblicherweise um mindestens zwei Lagen gummierter metallischer Festigkeitsträger, bei denen die einzelnen Corde unterschiedlicher Lagen gekreuzt zueinander vorliegen. Bei LKW-Reifen werden üblicherweise mindestens 3 Lagen gekreuzt übereinander angeordnet. Die metallischen Festigkeitsträger selbst besitzen die für Metalle übliche sehr hohe Wärmeleitfähigkeit. Es sind aber auch Gürtelpakete aus einer oder mehreren Gürtellagen aus anderen Gewebearten wie z. B. Aramidgewebe einsetzbar. Aufgrund der unterschiedlichen Steifigkeit von Stahlcord bzw. Aramid und Gummi treten im Bereich der Gürtelverstärkung und speziell der Gürtelkanten besonders hohe Kräfte auf. Auch die aus dem Stand der Technik bekannte Verwendung von Gummimischungen mit hohen Spannungswerten im Gürtelbereich kann den Verformungsweg und die damit auftretenden Kräfte nur geringfügig beeinflussen. Hervorgerufen durch die große Wärmeentwicklung kann es dabei über Gürtelkantenlockerungen, die die Runderneuerungsfähigkeit herabsetzen, bis hin zu Gürtelkantenablösungen und einer vollständigen Zerstörung des Reifens kommen. Häufig sind solche Reifenschäden wegen der besonders hohen Laufleistungen und der großen wirkenden Kräfte bei Nutzfahrzeugen wie Lkw, Bussen, Radladern usw. zu beobachten, aber auch bei anderen Fahrzeugen treten die beschriebenen Effekte auf. Um dem Problem der Gürtelkantenablösung entgegenzuwirken und damit die Haltbarkeit von Reifen zu verbessern, wurde schon auf verschiedene Weisen versucht, Einfluß auf die Temperatur im Reifen und speziell im Gürtelkantenbereich zu nehmen.

Aus der EP-A-0 209 125 ist ein gattungsgemäßer Fahrzeugluftreifen bekannt, den zwischen Schulterbereichen unterhalb der Lauffläche eine Gummimischung aufweist, die gegenüber der Laufflächenmischung wärmeleitfähiger ausgebildet ist.

So ist etwa aus der US 3,865,169 die Möglichkeit bekannt, die im Reifen entstehende thermische Energie durch Kühlrippen in einer gut wärmeleitfähigen Felge an die Atmosphäre durch den Fahrtwind abzugeben. Dabei ist es notwendig, daß im gesamten Reifen hoch wärmeleitfähige Drähte, Netze oder Bänder wie z. B. Metalldrähte eingebracht sind, die mit der Felge in unmittelbarem Kontakt stehen und so die Wärmeleitung nach außen garantieren. Die Konstruktion ist sehr aufwendig und über die sich verändernden Reifeneigenschaften durch die eingebrachten Drähte werden keine Aussagen gemacht. Allerdings ist dem Fachmann bekannt, daß sich Drähte im Seitenwandbereich auf viele Reifeneigenschaften, wie z. B. die komfortrelevante Eigenschaft Federung, negativ auswirken.

Aus der DE-OS 1755301 ist es bekannt die Temperaturentwicklung in Fahrzeugluftreifen und insbesondere in den Laufflächen zu verringern, indem der Fahrzeugluftreifen homogen in den Kautschuk und insbesondere in der Reifenlauffläche eingearbeitet Graphit enthält. Ein Laufstreifen, der in seiner Gesamtheit aus einer Graphit enthaltenden Kautschukmischung hergestellt ist, ermöglichte somit durch seine verbesserte Wärmeleitfähigkeit bei früher üblichen Diagonalreifen eine Erniedrigung der Temperatur in der Schulter des Laufstreifens. Die Gefahr von Laufflächentrennungen konnte damit vermindert werden. Die Zugabe von Graphit zu Kautschukmischungen speziell für Laufstreifen hat aber zur Folge, daß sich die Eigenschaften der vulkanisierten Mischungen verändern und diese nicht mehr den Anforderungen für heutige Hochleistungsreifen, bei denen es sich um Radialreifen mit Gürtel handelt, speziell im Hinblick auf optimalen Fahreigenschaften wie Naßgriff, Trockengriff, Rollwiderstand und Abrieb genügen. Dabei sind beispielsweise die Gleiteigenschaften des Graphits, die auch bei homogener Verteilung nicht vollständig unterdrückt werden können, zu beachten.

Eine Möglichkeit ohne schwerwiegende Nachteile in den Reifeneigenschaften die Wärmeentwicklung im Bereich der Gürtelkanten und damit die Temperatur zu verringern, ist die Anordnung je eines Gürtelkantenprofils zwischen zwei Gürtellagen, wobei die Gummimischung des Gürtelkantenprofils aus einer Gummimischung besteht, deren Shorehärte 60 bis 95 % der für die Gürtellagen eingesetzten Gummimischung und deren Rückprallelastizität (bei 70 °C) ≥ 60 % beträgt. Solch eine Anordnung wird in der DE 196 52 893 A1 beschrieben. Man führt dabei die geringere Wärmeentwicklung im Bereich der Gürtelkanten darauf zurück, daß auftretende Zwangsverformungen größtenteils in das weiche, hochelastische Gürtelkantenprofil verlagert werden. Die entstehende thermische Energie wird nicht abgeleitet, sondern ihr Entstehungsort nur zum Teil verlagert.

Der vorliegenden Erfindung liegt nun die Aufgabe zugrunde, einen Fahrzeugluftreifen bereitzustellen, bei dem durch geeignete Maßnahmen die Temperatur der Gummimischungen im gürtelnahen Bereich effektiv abgesenkt werden kann und dadurch die Haltbarkeit und Lebensdauer des Reifens verbessert werden, ohne daß gleichzeitig Einbußen bezüglich der gewünschten Fahreigenschaften hingenommen werden müssen.

Gelöst wird die gestellte Aufgabe erfindungsgemäß dadurch, daß im wesentlichen nur in unmittelbarer Nähe des Profilrillengrundes und der benachbarten Teile der Rillenflanken von zumindest einer Profilrille eine Gummimischung angeordnet ist, die zumindest den Raum zwischen dem Grund der Profilrille und der radial äußeren Lage der Gürtelverstärkung im wesentlichen ausfüllt, wobei die Gummimischung im Neuzustand des Fahrzeugluftreifens keinen Kontakt mit der Fahrbahn hat, und deren Wärmeleitfähigkeit um mindestens 5 % höher liegt als die Wärmeleitfähigkeit der sie umgebenden Gummimischung des Laufstreifens,
und/oder im Bereich von zumindest einer Reifenschulter eine Gummimischung angeordnet ist, die mindestens teilweise mit der unterhalb des Laufstreifens befindlichen Gürtelverstärkung in Verbindung steht, nicht mit der Fahrbahn in Kontakt kommt und sich in axialer Richtung, gegebenenfalls bis zur axial äußeren Begrenzung des Reifenkörpers, erstreckt, wobei die Wärmeleitfähigkeit der Gummimischung um mindestens 5 % höher liegt als die Wärmeleitfähigkeit der sie umgebenden Gummimischungen.

Der Grundgedanke der Erfindung ist darin zu sehen, daß der Wärmefluß zwischen Reifenaußenfläche und der Gürtelverstärkung durch eine Wärmeleitfähigkeitsbrücke aus einer Gummimischung mit deutlich verbesserter Wärmeleitfähigkeit erhöht wird. Die bei Benutzung des Reifens im Bereich der Gürtelverstärkung entstehende thermische Energie wird über die Gürtelverstärkung und die wärmeleitfähigere Gummimischung schnell in äußere Bereiche abgeleitet, wo sie an die Umgebungsluft abgegeben werden kann. Auf diese Weise können sehr hohe Temperaturen im Gürtelbereich verhindert und die Gefahr von Wärmeschädigungen oder Ablösungserscheinungen des Gürtels vermindert werden. Die Gummierungsmischungen der Festigkeitsträgerlagen (Gürtel- und Bandagenlagen) sind dabei im Allgemeinen höher wärmeleitfähig als die sie umgebenden Gummimischungen und sehr dünn ausgebildet, so daß entstehende Wärme durch diese Schichten sehr schnell abgeleitet werden kann. Zwischen radial äußerer Gürtel- bzw. Bandagenlage und der Laufstreifenmischung, die gegebenenfalls die wärmeleitfähigere Gummimischung in der Nähe der Profilrillen enthält, kann sich fertigungsbedingt zusätzlich eine dünne Unterplatte zur besseren Konfektionsklebrigkeit befinden. Bezüglich der gewünschten Fahr- und Reifeneigenschaften wie z. B. Naßgriff, Trockengriff, Rollwiderstand und Abrieb müssen bei den erfindungsgemäßen Anordnungen keine Einbußen hingenommen werden, denn der größte Teil des Laufstreifens - und vor allem der mit der Fahrbahn direkt in Berührung kommende Teil - bleibt in seiner hinsichtlich der Fahreigenschaften optimierten Mischungzusammensetzung erhalten.

Gleichzeitig bietet die Verwendung der beschriebenen Wärmeleitfähigkeitsbrücke Vorteile im Vulkanisationsprozeß, denn sie bewirkt auch eine rasche Wärmeeinleitung in relativ dicke Bereiche des Reifens, so daß der Reifen gleichmäßiger und rascher vulkanisiert wird und die Übervulkanisation dünnerer Bauteile, die mit einer Erhöhung des Rollwiderstandes verbunden ist, vermindert werden kann.

Bei der Anordnung der wärmeleitfähigeren Gummimischung im Bereich von zumindest einer Reifenschulter befindet sich die wärmeleitfähigere Mischung in unmittelbarer Nähe zum Ort der größten Wärmeentwicklung im Gürtelbereich, nämlich den Gürtelkanten, und von dort kann die Wärme effektiv in äußere Bereiche abgeleitet werden. Dabei kann die wärmeleitfähigere Gummimischung unterhalb des Laufstreifens sowohl bis zur äußeren Begrenzung des Reifenkörpers reichen, also direkt mit der Umgebungsluft in Verbindung stehen, als auch nur einen Teilbereich bis zur Außenwand einnehmen. Bei letzterem Fall kann sich noch eine schützende Schicht einer herkömmlichen Seitenwandmischung über der wärmeleitfähigeren Mischung befinden. In diesem erfindungsgemäßen Bereich im Reifenkörper, in dem sich die wärmeleitfähigere Mischung befindet, können Kompromisse bezüglich der Materialeigenschaften aufgrund der geringeren mechanischen Beanspruchung eher akzeptiert werden. Es müssen dort nicht gleichermaßen hohe Anforderungen an die Materialeigenschaften gestellt werden, wie sie z. B. für Laufstreifenmischungen (z. B. bezüglich Härte und Weiterreißfestigkeit) und Seitenwandmischungen (z. B. bezüglich Weiterreißfestigkeit, Heat-build-up und Ozonbeständigkeit) unverzichtbar sind. Die Einbringung der wärmeleitfähigeren Mischung kann zweckmäßig in den herkömmlichen Reifenaufbauprozeß, beispielsweise durch Auflegen eines Mischungsstreifen, integriert werden. Zusätzlich bietet sich bei dieser Anordnung der Vorteil, daß die wärmeleitfähigere Mischung bei der Runderneuerung, bei der nur der Laufstreifen abgeschliffen wird, nahezu vollständig erhalten bleibt und auch im runderneuerten Reifen wieder eine deutlich verbesserte Wärmeableitung gewährleistet.

Eine besonders große Wirkung im Hinblick auf die Wärmeableitung vom Gürtelbereich kann erzielt werden, wenn die wärmeleitfähigeren Mischungen sowohl in unmittelbarer Nähe des Profilrillengrundes und der benachbarten Teile der Rillenflanken von zumindest einer Profilrille als auch im Bereich von zumindest einer Reifenschulter sich axial nach außen erstreckend angeordnet sind.

Gemäß einer bevorzugten Ausführungsform der Erfindung handelt es sich bei der Profilrille, bei der im wesentlichen nur in unmittelbarer Nähe des Profilrillengrundes und der benachbarten Teile der Rillenflanken die wärmeleitfähigere Mischung angeordnet ist, um eine Umfangsrille. Diese Ausführungsform bietet den Vorteil, daß sie einfach herstellbar ist und gut den in den Prozeß des Reifenaufbaus, z. B. durch Extrusion oder Auflegen von Gummistreifen auf den Gürtel, integriert werden kann. Besonders nutzbringend für die Wärmeableitung ist es außerdem, wenn es sich bei den genannten Umfangsrillen um die den Reifenschultern nächstliegenden Rillen handelt, da im Bereich der Schultern, d. h. im Bereich der Gürtelkanten, die Wärmeentwicklung besonders groß ist und dort speziell das Problem der Gürtelkantenablösungen effektiv bekämpft werden kann.

Um die Wärmeleitung möglichst wirkungsvoll zu gestalten und die Wärmeleitfähigkeitsbrücke möglichst gut auszunutzen, hat es sich bei der Anordnung der wärmeleitfähigeren Mischung in der Nähe der Profilrillen als sinnvoll erwiesen, daß sich die Gummimischung mit erhöhter Wärmeleitfähigkeit über 5 % bis 95 % der Gesamttiefe der Profilrille beim Neureifen ausgehend vom Grund der Profilrille erstreckt. Die wärmeleitfähigere Gummimischung schließt den Profilrillengrund und den radial unteren Teil der Flanken von Profilrillen oder -vertiefungen ein. Auf diese Weise erhält man eine hinreichend große Austauschfläche mit der Umgebungsluft.

Gemäß einer Weiterbildung der Erfindung nach Anspruch 5 beträgt der Abstand zwischen dem Grund der Profilrille und der radial äußeren Gürtellage oder Bandagenlage (Grundstärke) 2 bis 6 mm, so daß die Grundstärke in einem Bereich liegt, der zum einen dünn genug ist, um eine gute Wärmeabfuhr zu gewährleisten, und zum anderen dick genug gewählt werden kann, um sowohl hinreichend vor Verletzungen des Gürtels zu schützen, als auch die bei Lkw-Reifen gewünschte Nachschneidbarkeit der Profilrillen zu ermöglichen.

Vorteilhafter Weise weist die wärmeleitfähigere Gummimischung in der Nähe von Profilrillen und/oder im Bereich der Reifenschultern eine um ca. 20 % höhere Wärmeleitfähigkeit auf als die Wärmeleitfähigkeit der sie umgebenden Gummimischung. Die Effektivität der Wärmeleitfähigkeitsbrücke kann auf diese Weise erhöht werden.

Als zweckmäßig hat es sich ferner herausgestellt, daß die wärmeleitfähigere Gummimischung zusätzlich eine höhere Härte aufweist als die sie umgebende Gummimischung. Bei der Anordnung der wärmeleitfähigeren Mischung in der Nähe des Grundes und der Flanken von Profilrillen kann man dadurch beispielsweise mehrere zusätzliche positive Effekte erzielen. Zum einen bewirkt die härtere Mischung, die sich erfindungsgemäß bis in die Rillenflanken erstrecken kann, ein Abstützen der umgebenden Laufstreifenmischung in den Profilklötzen, was mit einer Verbesserung des Abriebverhaltens verbunden ist. Insbesondere der unregelmäßige Abrieb der Profilklötze kann auf diese Weise vermindert werden. Zum anderen führt die erfindungsgemäße Anordnung einer härteren Mischung in den Rillenflanken zu einer verbesserten Seitenführung im Handling.

Zum Erhöhen der Wärmeleitfähigkeit einer Gummimischung kann man als Füllstoffe neben Ruß vor allem auch Metalle wie z. B: Aluminium, Magnesium, Kupfer, Zink und Nickel oder Metall enthaltende Substanzen wie z. B. Zinkoxid, Aluminiumhydroxid, Aluminiumoxid, Silicium-Aluminium-Oxide, Magnesiumoxid, Chromoxid, Titanoxid, Bornitrid, Aluminiumnitrid, Borcarbid, Titancarbid oder Siliziumcarbid oder Gemische aus den genannten Substanzen mit großem Effekt einsetzen. Diese Füllstoffe können dabei in Form von sphärischen Partikeln, Plättchen oder Nadeln verwendet werden. Bei Verwendung von Plättchen oder Nadeln besteht zusätzlich die Möglichkeit, diese in bestimmten, bevorzugten Richtungen auszurichten. Einige dieser Füllstoffe vermögen der Gummimischung eine andere Farbe zu verleihen als das typische Schwarz von herkömmlichen Reifenmischungen, so daß die Funktionalität des wärmeleitfähigeren Bereiches des Reifens auch nach außen hin, z. B. dem Kunden, sichtbar gemacht werden kann.

Es ist möglich eine Gummimischung mit höherer Wärmeleitfähigkeit bereitzustellen, indem man der Gummimischung entweder als Füllstoff mehr Ruß (vorteilhafter Weise mindestens ca. 10 phr mehr) als der umgebenden Gummimischung hinzufügt oder indem man den Anteil an Zinkoxid um mehr als 5 phr gegenüber der umgebenden Gummimischung erhöht, wobei die Erhöhung des Rußanteils neben einer Härteerhöhung einen verkürzenden Effekt auf die Vulkanisationszeit der Mischung hat, während die Vergrößerung des Zinkoxid-Anteils neben einer Härteerhöhung die Reversionsbeständigkeit der Gummimischung verbessert. Die Erhöhung des Rußanteils in der Mischung bringt zudem den Vorteil, daß eine solche Mischung im Profilrillengrund hohen Schutz vor Nutenverletzungen bietet; Steine oder sonstige harte und scharfkantige Gegenstände können diese Gummimischung schlecht durchwandern. Die Gefahr, daß der Gürtel stellenweise freigelegt wird und beginnen kann, zu korrodieren, wird verringert. Durch den relativ guten Schutz vor Verletzungen mit der rußhaltigeren Mischung ist es außerdem möglich, die Profilrillen breiter zu gestalten und auf diese Weise die effektive Fläche für den Wärmeaustausch weiter zu erhöhen.

Da die wärmeleitfähigere Gummimischung hohen Temperaturen und Temperaturschwankungen ausgesetzt ist, hat es sich als zweckmäßig erwiesen, dieser Gummimischung ein Alterungsschutzmittel mit guten Hitzeschutzeigenschaften zuzusetzen. Als Beispiel seien hier die Alterungsschutzmittel 6PPD (N-Phenyl-N'-(1,3-dimethylbutyl)-p-phenylendiamin) und DTPD (N,N'-Ditoluyl-p-phenylendiamin) genannt.

Ist im Bereich von zumindest einer Reifenschulter die wärmeleitfähigere Gummimischung angeordnet, die mindestens teilweise mit der unterhalb des Laufstreifens befindlichen Gürtelverstärkung in Verbindung steht, nicht mit der Fahrbahn in Kontakt kommt und sich in axialer Richtung, gegebenenfalls bis zur axial äußeren Begrenzung des Reifenkörpers, erstreckt, kann die Wärmeableitung von Orten hoher Wärmeentwicklung dadurch unterstützt werden, daß die Reifenoberfläche (Fläche für den Wärmeaustausch) in den entsprechenden Bereichen, in denen sich die wärmeleitfähigeren Gummimischungen in axialer Richtung erstrecken, vergrößert wird. Dies kann z. B. durch eine wellenförmige Ausbildung dieses Bereiches geschehen, wobei Wellenberg und Wellental sich bevorzugt in radialer Richtung abwechseln, so daß es dem Effekt von Kühlrippen gleichkommt. Die Oberfläche kann aber z. B. auch vergrößert werden, indem in Umfangsrichtung abwechselnd radial verlaufende Rippen und Rillen angeordnet werden.

Ausführungsbeispiele und weitere Vorteile der vorliegenden Erfindung werden im Zusammenhang mit den nachstehenden Figuren näher erläutert, ohne daß die Erfindung jedoch auf diese Beispiele beschränkt ist.

Fig. 1    zeigt schematisch einen radialen Teilschnitt eines Fahrzeugluftreifens.
Fig. 2    zeigt schematisch eine Ausschnittsvergrößerung einer Profilrille mit dem darunterliegenden Gürtel aus einem radialen Teilschnitt eines Fahrzeugluftreifens.
Fig. 3    zeigt schematisch einen radialen Teilschnitt eines Fahrzeugluftreifens.

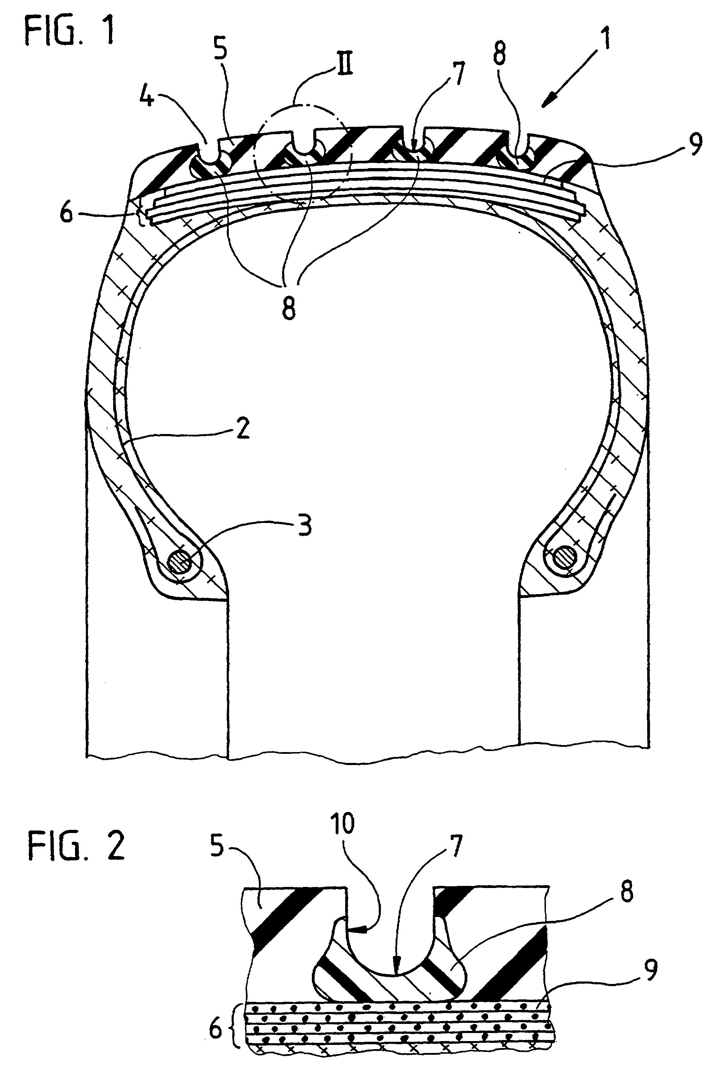

Der in Fig. 1 schematisch dargestellte Fahrzeugluftreifen 1 besitzt einen für Nutzfahrzeugreifen typischen Aufbau aus einer luftundurchlässigen Innenschicht, einer Festigkeitsträger enthaltenden gummierten Karkasse 2, die vom Zenitbereich des Fahrzeugluftreifens 1 über die Seitenwände bis in den Wulstbereich reicht und dort durch Umschlingen zugfester Wulstkerne 3 verankert ist, einer radial außen befindlichen, Profilrillen 4 aufweisenden Lauffläche 5 und einer Gürtelkonstruktion 6 aus vier Lagen bestehend aus gummierten metallischen Festigkeitsträgern. Am Grund 7 der Profilrillen 4 befindet sich die Gummimischung 8, deren Wärmeleitfähigkeit mindestens um 5 % höher liegt als die der Gummimischung des sie umgebenden Laufstreifens 5, und die im Kontakt steht mit der radial äußeren Gürtellage 9 und auf diese Weise eine gute Ableitung der im Gürtel entstehenden Wärme an den Grund 7 der Profilrillen 4 und damit an die Umgebungsluft gewährleistet. Es kommt dann im Gürtelbereich nicht zu den starken Überhitzungen, die Lockerungen oder Ablösungen des Gürtels zur Folge haben können. Bei den im Beispiel dargestellten Profilrillen 4 handelt es sich um Längsrillen, die gemäß einer Weiterbildung der Erfindung den Vorteil einer einfachen Herstellbarkeit bieten. Auch die schulternahesten Profilrillen sind mit der erfindungsgemäßen Anordnung der wärmeleitfähigen Gummimischung 8 versehen, da dort die auftretende thermische Energie, verursacht durch Walkarbeit, besonders groß ist und dort besonders großer Bedarf besteht, diese abzuführen.

In Fig. 2 ist die Umgebung einer Profilrille 4 des Laufstreifens 5 schematisch als vergrößerter Ausschnitt dargestellt. Die wärmeleitfähigere Gummimischung 8 befindet sich im wesentlichen nur in unmittelbarer Nähe des Profilrillengrundes 7 und der benachbarten Teile der Rillenflanken 10 und füllt den Raum zwischen Profilrillengrund 7 und der radial äußeren Gürtellage 9 im wesentlichen aus, wobei der Abstand zwischen Profilrillengrund 7 und radial äußerer Gürtellage 9 2 bis 6 mm betragen sollte. Der Teil des Laufstreifens 5, der mit der Fahrbahn in Berührung kommt, wird in den Eigenschaften, die durch die Laufstreifengummimischung bewirkt werden, auf diese Weise kaum beeinflußt und trotzdem wird eine gute Ableitung der Wärme durch die Wärmeleitfähigkeitsbrücke zwischen radial äußerer Gürtellage 9 und Profilrillengrund 7 bewirkt. Dadurch, daß sich die Mischung mit der höheren Wärmeleitfähigkeit über 5 bis 95 % der Gesamttiefe der Profilrillen 4 erstrecken kann, besteht die Möglichkeit, die effektive Austauschfläche mit der Umgebungsluft zu vergrößern. Die beschriebene Anordnung der wärmeleitfähigeren Gummimischung 8 bringt bei gleichzeitiger Erhöhung der Härte dieser Gummimischung 8 durch die Erstreckung in die Rillenflanken 10 für die Profilklötze Abstützeffekte, die Vorteile beim Abrieb und im Handling (Seitenführung) bieten. Wird bei der erfindungsgemäßen Gummimischung 8 der Rußanteil erhöht, ergibt sich bei der beschriebenen Anordnung der positive Effekt eines Schutzes des Gürtels vor Nutenverletzungen.

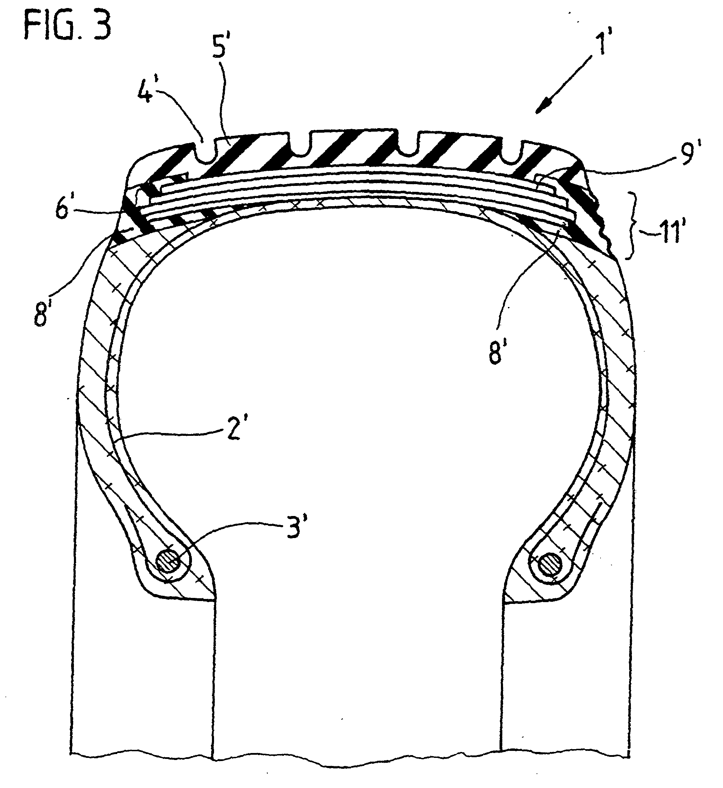

Fig. 3 zeigt ebenfalls schematisch einen Fahrzeugluftreifen 1' mit dem in Fig. 1 beschriebenen typischen Aufbau. Bei diesem Fahrzeugluftreifen 1' befinden sich die wärmeleitfähigeren Gummimischungen 8' unterhalb des Laufstreifens 5' im Bereich der Reifenschultern. Die Gummimischungen 8' stehen im Kontakt mit den axial äußeren Enden der Gürtelkonstruktion 6' aus vier Lagen gummierter metallischer Festigkeitsträger und reichen bis zur axial äußeren Begrenzung des Reifenkörpers. Durch diesen Aufbau kann Wärme von den Gürtelkanten in den seitlichen Bereich zur Außenwand des Reifen abgeleitet und dort an die Umgebungsluft abgegeben werden. In Fig. 3 ist zusätzlich an einer Seite des Reifens dargestellt, daß die axial äußere Oberfläche des Reifenkörpers in dem Bereich 11', in dem sich die wärmeleitfähigere Gummimischung 8' befindet, durch Ausbildung von Wellen, die als Kühlrippen wirken, vergrößert ist. Auf diese Weise wird die effektive Wärmeaustauschfläche vergrößert.

In den Tabelle 1 und 2 sind einige Beispiele für die erfindungsgemäßen wärmeleitfähigeren Gummimischungen 8, 8' für die Einbringung zwischen Profilrillengrund 7 und radial äußerer Gürtellage 9 (s. a. Fig 1) und für den Bereich der Reifenschultern (s. a. Fig. 3) aufgeführt. Die erfindungsgemäßen Gummimischungen der Tabelle 1 sind dabei besonders für die Einbringung zwischen Profilrillengrund 7 und radial äußerer Gürtellage 9 geeignet. Alle in den Tabellen 1 und 2 angeführten Mischungen sind aber prinzipiell für alle Bereiche des Reifens, in denen eine verbesserte Wärmeabfuhr von Nutzen ist, verwendbar. Als Vergleich sind Basismischungen in die Tabellen aufgenommen, die typischer Weise in Laufstreifen, speziell von Nutzfahrzeugen, Verwendung finden. In sämtlichen angegebenen Mischungen sind die Anteile der einzelnen Mischungskomponenten auf 100 Gewichtsteile Kautschuk in der Mischung bezogen (phr).

Die verschiedenen Mischungen wurden bei 150 °C vulkanisiert und der Vulkanisationsprozeß über ein rotorloses Vulkameter (MDR = Moving Disc Rheometer) gemäß DIN 53 529 verfolgt. Daraus wurden die Umsatzzeiten bis zum Erreichen der relativen Vernetzungsgrade von 10 und 90 % ($t_{10}$, $t_{90}$) für alle Mischungen (Tab. 1 und 2) bestimmt und die Umsatzzeiten bis zum Erreichen der relativen Vernetzungsgrade von 100 % ($t_{100}$) sowie die Zeiten bis zum Erreichen von 2 und 5 % Reversion ($tr_{98}$, $tr_{95}$) für die Mischungen der Tabelle 1 ermittelt.

Aus den Mischungen wurden Prüfkörper durch 25-minütige Vulkanisation in einer Presse bei 150°C hergestellt und mit diesen Proben für die Erfindung wesentliche Materialeigenschaften bestimmt. Die Materialeigenschaften, die nach den folgenden Meßverfahren bestimmt wurden, sind in Tabelle 1 aufgelistet.

- Zugfestigkeit bei Raumtemperatur gemäß DIN 53 504
- Spannungswert 300 % bei Raumtemperatur gemäß DIN 53 504
- Shorehärte (ShA) bei Raumtemperatur gemäß DIN 53 505
- Rückprallelastizität bei Raumtemperatur gemäß DIN 53 512
- Wärmeleitfähigkeit mit dem Gerät Kemtherm QTM-D3-PD3 der Firma Kyoto Electronics gemäß DIN 52 612 (Ausgangstemperatur: Raumtemperatur)

Als Kautschukkomponente kam in allen Mischungsbeispielen Naturkautschuk zum Einsatz. Anstelle von Naturkautschuk können auch alle dem Fachmann für die Herstellung von Fahrzeugluftreifen bekannten Polymere und Polymerverschnitte verwendet werden, dabei kann es sich beispielsweise um ein oder mehrere Kautschuke aus der Gruppe der Dienkautschuke, wie Polybutadien, handeln. Von Vorteil ist es, wenn für die erfindungsgemäße Mischung im Falle größerer Härte ein Kautschuk oder Kautschukverschnitt mit guter Ermüdungsbeständigkeit benutzt wird, um die Gefahr von Ermüdungsbrüchen zu senken. Dafür kommen vor allem Polybutadien und spezielle lösungs- oder emulsionspolymerisierte Styrol-Butadien-Kautschuke in Betracht. Als weitere Bestandteile waren in sämtlichen aufgeführten Beispielmischungen übliche Zusatzstoffe, wie Stearinsäure, Wachs, Alterungsschutzmittel, Schwefel und Beschleuniger enthalten, wobei die Beschleunigermengen in den Mischungen der Tabelle 1 0,8 phr und in den Mischungen der Tabelle 2 0,5 phr betrugen. Die anderen Mischungsbestandteile Ruß der Typen N121 und N339 klassifiziert nach ASTM-D 1765, Zinkoxid, Aluminiumoxid (BET-Oberfläche: 150 $m^2$/g), Aluminiumhydroxid (BET-Oberfläche: 25 $m^2$/g, z. B. Martinal® von der Firma Martinswerke GmbH, Deutschland) und aromatische Öle wurden bei den angeführten Mischungen in unterschiedlichen Mengen eingesetzt. Die Mischungen können aber selbstverständlich auch andere, dem Fachmann bekannte Zusatzstoffe für Kautschukmischungen, wie z. B. Kieselsäure und Silan-Kuppungsagenzien, beinhalten. Insbesondere kann es vorteilhaft sein, bei Verwendung Metall enthaltender Füllstoffe Agentien zu verwenden, die die Wechselwirkung zwischen Füllstoffoberfläche und Kautschuk verstärken, wie z. B. funktionalisierte Silane.

Wie aus den Tabellen 1 und 2 ersichtlich ist, besitzen die Vulkanisate der erfindungsgemäßen Mischungen eine Wärmeleitfähigkeit, die um mindestens 5 % höher liegt, als die Wärmeleitfähigkeit der Basismischung.

Die höhere Wärmleitfähigkeit wurde in den Beispielmischungen der Tabelle 1 dadurch erreicht, daß der Anteil an den wärmeleitfähigeren Bestandteilen der Kautschukmischungen Ruß und/oder Zinkoxid gegenüber der Basismischung erhöht wurde. Um deutlich merkliche Effekte in der Wärmeleitfähigkeit zu erzielen, sollte in der erfindungsgemäßen Gummimischung 8 zweckmäßiger Weise der Rußanteil um mindestens 10 phr und/oder der Zinkoxidanteil um mindestens 5 phr gegenüber der umgebenden Gummimischung 5 erhöht werden. Bei großen Rußmengen wurde zur besseren Verarbeitbarkeit Prozeßöl (aromatisches Öl) zugegeben. Letztgenannte Maßnahme ist aber nicht zwingend erforderlich.

Anhand der Daten des Vulkanisationsvorganges in Tabelle 1 ist zu ersehen, daß die Erhöhung des Rußanteils eine vorteilhafte Verkürzung der Vulkanisationszeit bis zu 100 %iger Vernetzung nach sich zieht (s. Beispiele 3 und 4). Ein höherer Anteil an Zinkoxid verzögert dagegen den teilweisen Netzwerkabbau (Reversion) (s. Beispiele 1 und 2). Je nach gewünschtem Vulkanisationsverhalten kann also eine entsprechende Zusammensetzung ausgewählt werden.

Aus der Prüfung der Materialeigenschaften der Vulkanisate der Tabelle 1 geht hervor, daß die Vulkanisate, die aus den erfindungsgemäßen Mischungen gefertigt sind, eine höhere Shorehärte besitzen als das Vulkanisat der Basismischung und auf diese Weise bei Verwendung der erfindungsgemäßen Mischung im Bereich der Profilrillenflanken durch die erhöhte Stabilität der Profilklötze die schon erwähnten Verbesserungen im Abrieb und in der Seitenführung erzielt werden können.

In den Beispielmischungen der Tabelle 2 wurde die höhere Wärmleitfähigkeit durch Zugabe von Aluminiumoxid bzw. Aluminiumhydroxid zur Kautschukmischung erreicht.

Tabelle 1

| Mischungszusammensetzung | Einheit | Basismischung | Beispiel 1 (Erfindung) | Beispiel 2 (Erfindung) | Beispiel 3 (Erfindung) | Beispiel 4 (Erfindung) |
|---|---|---|---|---|---|---|
| Naturkautschuk | phr | 100 | 100 | 100 | 100 | 100 |
| Ruß N121 | phr | 46 | 46 | 46 | 50 | 50 |
| Ruß N339 | phr | - | - | - | 15 | 15 |
| Zinkoxid | phr | 3 | 11,5 | 20 | 3 | 20 |
| Stearinsäure | phr | 2 | 2 | 2 | 2 | 2 |
| Wachs | phr | 1 | 1 | 1 | 1 | 1 |
| Aromatische Öle | phr | - | - | - | 5 | 5 |
| Alterungsschutzmittel | phr | 2,5 | 2,5 | 2,5 | 2,5 | 2,5 |
| Beschleuniger | phr | 0,8 | 0,8 | 0,8 | 0,8 | 0,8 |
| Schwefel | phr | 1,5 | 1,5 | 1,5 | 1,5 | 1,5 |
| **Vulkanisation** | | | | | | |
| $t_{10}$ | min | 3,1 | 3,5 | 3,4 | 2,6 | 2,8 |
| $t_{90}$ | min | 8,3 | 9,0 | 9,0 | 7,7 | 8,1 |
| $t_{100}$ | min | 13,9 | 15,6 | 16,2 | 13,1 | 13,7 |
| $tr_{98}$ | min | 20,8 | 22,5 | 22,7 | 18,3 | 19,6 |
| $tr_{95}$ | min | 28,3 | 30,8 | 31,0 | 24,3 | 26,2 |
| **Materialeigenschaften** | | | | | | |
| Zugfestigkeit bei RT | N/mm$^2$ | 25,7 | 25,2 | 24,8 | 22,9 | 20,5 |
| Spannungswert 300 % bei RT | N/mm$^2$ | 15,45 | 14,89 | 15,48 | 19,11 | 19,75 |
| Shorehärte bei RT | ShA | 65,0 | 65,7 | 66,8 | 71,3 | 72,2 |
| Rückprallelastizität bei RT | % | 48,6 | 48,0 | 48,0 | 37,9 | 37,7 |
| Wärmeleitfähigkeit | $\frac{W}{m*K}$ | 0,2772 | 0,2920 | 0,3079 | 0,3126 | 0,3395 |

Tabelle 2

| Mischungszusammensetzung | Einheit | Basismischung | Beispiel 5 (Erfindung) | Beispiel 6 (Erfindung) | Beispiel 7 (Erfindung) | Beispiel 8 (Erfindung) | Beispiel 9 (Erfindung) |
|---|---|---|---|---|---|---|---|
| Naturkautschuk | phr | 100 | 100 | 100 | 100 | 100 | 100 |
| Ruß N121 | phr | 46 | 46 | 46 | 46 | 50 | 50 |
| Aluminiumoxid | phr | - | 20 | 40 | 80 | - | - |
| Aluminiumhydroxid | phr | - | - | - | - | 10 | 30 |
| Zinkoxid | phr | 3 | 3 | 3 | 3 | 3 | 3 |
| Stearinsäure | phr | 2 | 2 | 2 | 2 | 2 | 2 |
| Wachs | phr | 1 | 1 | 1 | 1 | 1 | 1 |
| Aromatische Öle | phr | - | 2,5 | 5 | 10 | 1,25 | 3,75 |
| Alterungsschutzmittel | phr | 2,5 | 2,5 | 2,5 | 2,5 | 2,5 | 2,5 |
| Beschleuniger | phr | 0,5 | 0,5 | 0,5 | 0,5 | 0,5 | 0,5 |
| Schwefel | phr | 1,5 | 1,5 | 1,5 | 1,5 | 1,5 | 1,5 |
| **Vulkanisation** | | | | | | | |
| $t_{10}$ | min | 3,1 | 0,8 | 0,6 | 0,4 | 3,2 | 3,1 |
| $t_{90}$ | min | 8,4 | 4,7 | 3,1 | 2,2 | 8,8 | 9,0 |
| **Materialeigenschaften** | | | | | | | |
| Zugfestigkeit bei RT | $N/mm^2$ | 22,4 | 14,0 | 13,7 | 12,2 | 22,6 | 18,9 |
| Spannungswert 300 % bei RT | $N/mm^2$ | 11,58 | 7,79 | 10,20 | 10,22 | 10,67 | 9,94 |
| Shorehärte bei RT | ShA | 58,8 | 53,2 | 57,3 | 63,0 | 57,5 | 57,6 |
| Rückprallelastizität bei RT | % | 47,3 | 45,3 | 46,2 | 38,2 | 48,0 | 45,0 |
| Wärmeleitfähigkeit | $\frac{W}{m*K}$ | 0,2752 | 0,3011 | 0,3181 | 0,3627 | 0,2973 | 0,3384 |

**Bezugzeichenliste**

1, 1'    Fahrzeugluftreifen (radialer Teilschnitt)
2, 2'    gummierte Karkasse
3, 3'    Wulstkern
4, 4'    Profilrille
5, 5'    Gummilaufstreifen
6, 6'    Gürtelverstärkung aus Lagen gummierter metallischer Festigkeitsträger
7        Profilrillengrund
8, 8'    wärmeleitfähigere Gummimischung
9, 9'    radial äußere Gürtellage
10       Rillenflanken
11'      Bereich vergrößerter Oberfläche des Reifenkörpers


**Patentansprüche**

**1.**  Fahrzeugluftreifen, insbesondere für Nutzfahrzeuge, mit

-    einer luftundurchlässigen Innenschicht,
-    einer Festigkeitsträger enthaltenden gummierten Karkasse, die vom Zenitbereich des Fahrzeugluftreifens über die Seitenwände bis in den Wulstbereich reicht und dort durch Umschlingen zugfester Wulstkerne verankert ist,
-    einem radial außen befindlichen, Profilrillen aufweisenden Gummilaufstreifen,
-    einer Gürtelverstärkung mit zumindest einer zwischen dem Gummilaufstreifen und der Karkasse befindlichen Gürtellage, die gummierte Festigkeitsträger enthält,
-    und weiteren üblichen Bestandteilen wie z. B. Bandagen,

**dadurch gekennzeichnet, daß** im wesentlichen nur in unmittelbarer Nähe des Profilrillengrundes (7) und der benachbarten Teile der Rillenflanken (10) von zumindest einer Profilrille (4) eine Gummimischung (8) angeordnet ist, die zumindest den Raum zwischen dem Grund (7) der Profilrille (4) und der radial äußeren Lage (9) der Gürtelverstärkung (6) im wesentlichen ausfüllt, wobei die Gummimischung (8) im Neuzustand des Fahrzeugluftreifens (1) keinen Kontakt mit der Fahrbahn hat, und deren Wärmeleitfähigkeit um mindestens 5 % höher liegt als die Wärmeleitfähigkeit der sie umgebenden Gummimischung des Laufstreifens (5),
und/oder im Bereich von zumindest einer Reifenschulter eine Gummimischung (8') angeordnet ist, die mindestens teilweise mit der unterhalb des Laufstreifens (5') befindlichen Gürtelverstärkung (6') in Verbindung steht, nicht mit der Fahrbahn in Kontakt kommt und sich in axialer Richtung, gegebenenfalls bis zur axial äußeren Begrenzung des Reifenkörpers, erstreckt, wobei die Wärmeleitfähigkeit der Gummimischung (8')um mindestens 5 % höher liegt als die Wärmeleitfähigkeit der sie umgebenden Gummimischungen.

**2.**  Fahrzeugluftreifen nach Anspruch 1, **dadurch gekennzeichnet, daß** zumindest im wesentlichen nur in unmittelbarer Nähe des Profilrillengrundes (7) und der benachbarten Teile der Rillenflanken (10) von zumindest einer Profilrille (4) die wärmeleitfähigere Gummimischung (8) angeordnet ist und die Profilrille (4), in deren Nähe die wärmeleitfähigere Gummimischung (8) angeordnet ist, eine Umfangsrille ist.

**3.**  Fahrzeugluftreifen nach Anspruch 1 und/oder 2, **dadurch gekennzeichnet, daß** die wärmeleitfähigere Gummimischungen (8) in der Nähe der beiden schulternahesten Umfangsrillen angeordnet sind.

**4.**  Fahrzeugluftreifen nach zumindest einem der vorhergehenden Ansprüche, **dadurch gekennzeichnet, daß** sich die wärmeleitfähigere Gummimischung (8) über 5 % bis 95 % der Gesamttiefe der Profilrille (4) beim Neureifen ausgehend vom Profilrillengrund (7) nach radial außen erstreckt.

**5.**  Fahrzeugluftreifen nach zumindest einem der vorhergehenden Ansprüche, **dadurch gekennzeichnet, daß** der Abstand zwischen dem Grund (7) der Profilrille (4) und der radial äußeren Gürtellage (9) 2 bis 6 mm beträgt.

**6.**  Fahrzeugluftreifen nach zumindest einem der vorhergehenden Ansprüche, **dadurch gekennzeichnet, daß** die wärmeleitfähigere Gummimischung (8, 8') eine um ca. 20 % höhere Wärmeleitfähigkeit aufweist als die Wärmeleitfähigkeit der sie umgebenden Gummimischung.

**7.** Fahrzeugluftreifen nach zumindest einem der vorhergehenden Ansprüche, **dadurch gekennzeichnet, daß** die wärmeleitfähigere Gummimischung (8, 8') eine höhere Härte aufweist als die Härte der sie umgebenden Gummimischung.

**8.** Fahrzeugluftreifen nach zumindest einem der vorhergehenden Ansprüche, **dadurch gekennzeichnet, daß** die wärmeleitfähigere Gummimischung (8, 8') als Füllstoffe Ruß, Metalle, Metall enthaltende Substanzen, Bornitrid, Borcarbid und/oder Siliziumcarbid enthält.

**9.** Fahrzeugluftreifen nach zumindest einem der vorhergehenden Ansprüche, **dadurch gekennzeichnet, daß** die wärmeleitfähigere Gummimischung (8, 8') als Füllstoff mehr Ruß enthält als die sie umgebende Gummimischung.

**10.** Fahrzeugluftreifen nach zumindest einem der vorhergehenden Ansprüche, **dadurch gekennzeichnet, daß** die wärmeleitfähigere Gummimischung (8, 8') mindestens 5 phr mehr Zinkoxid enthält als die sie umgebende Gummimischung.

**11.** Fahrzeugluftreifen nach zumindest einem der vorhergehenden Ansprüche, **dadurch gekennzeichnet, daß** die wärmeleitfähigere Gummimischung (8, 8') Alterungsschutzmittel mit gutem Hitzeschutz enthält.

**12.** Fahrzeugluftreifen nach Anspruch 1, **dadurch gekennzeichnet, daß** die wärmeleitfähigere Gummimischung (8') zumindest im Bereich von zumindest einer Reifenschulter angeordnet ist, mindestens teilweise mit der unterhalb des Laufstreifens (5') befindlichen Gürtelverstärkung (6') in Verbindung steht, nicht mit der Fahrbahn in Kontakt kommt und sich in axialer Richtung, gegebenenfalls bis zur axial äußeren Begrenzung des Reifenkörpers, erstreckt und daß die axial äußere Oberfläche des Reifenkörpers in dem Bereich, in denen sich die wärmeleitfähigere Gummimischung (8') in axialer Richtung erstreckt, vergrößert ist.

**Claims**

**1.** Pneumatic vehicle tyre, especially for utility vehicles, which has

- an inner layer which is impermeable to air,

- a rubberised carcase containing reinforcing members, which extends from the crown region of the pneumatic vehicle tyre via the side walls into the bead region, and is secured there by tenacious bead cores being wound round it,

- a rubber tread strip which is situated radially on the outside and has tread grooves,

- a belt reinforcement having at least one belt ply situated between the rubber tread strip and the carcase and which contains rubberised reinforcing members,

- and additional customary constituent parts such as bindings for example,

**characterised in that**, there is disposed substantially only in the immediate vicinity of the bottom (7) of the tread grooves and the adjacent parts of the groove walls (10) of at least one tread groove (4) a rubber mixture (8) which substantially fills at least the space between the bottom (7) of the tread groove (4) and the radially outer ply (9) of the belt reinforcement (6), the rubber mixture (8) in the new state of the pneumatic vehicle tyre (1) having no contact with the roadway and its thermal conductivity being at least 5% higher than the thermal conductivity of the rubber mixture of the tread strip (5) which surrounds it,
and/or there is arranged in the region of at least one tyre shoulder a rubber mixture (8') which is connected at least partially with the belt reinforcement (6') situated below the tread strip (5'), does not come into contact with the roadway and extends in an axial direction, possibly up to the axially outer boundary of the tyre body, the thermal conductivity of the rubber mixture (8') being at least 5% higher than the thermal conductivity of the rubber mixtures surrounding it.

2. Pneumatic vehicle tyre according to claim 1, **characterised in that** the thermally more conductive rubber mixture (8) is arranged at least substantially only in the immediate vicinity of the bottom (7) of the tread grooves and the adjacent parts of the groove walls (10) of at least one tread groove (4), and the tread groove (4), in the vicinity of which the thermally more conductive rubber mixture (8) is arranged, is a circumferential groove.

3. Pneumatic vehicle tyre according to claim 1 and/or 2, **characterised in that** the thermally more conductive rubber mixtures (8) are arranged in the vicinity of the two circumferential grooves which are closest to the shoulder.

4. Pneumatic vehicle tyre according to at least one of the preceding claims, **characterised in that** the thermally more conductive rubber mixture (8) extends radially outwards over 5 to 95% of the total depth of the tread groove (4) in the new tyre, starting from the bottom (7) of the tread groove.

5. Pneumatic vehicle tyre according to at least one of the preceding claims, **characterised in that** the spacing between the bottom (7) of the tread groove (4) and the radially outer belt ply (9) is 2 to 6 mm.

6. Pneumatic vehicle tyre according to at least one of the preceding claims, **characterised in that** the thermally more conductive rubber mixture, (8, 8') has a thermal conductivity which is approx. 20% higher than the thermal conductivity of the rubber mixture surrounding it.

7. Pneumatic vehicle tyre according to at least one of the preceding claims, **characterised in that** the thermally more conductive rubber mixture (8, 8') has a greater hardness than the hardness of the rubber mixture surrounding it.

8. Pneumatic vehicle tyre according to at least one of the preceding claims, **characterised in that** the thermally more conductive rubber mixture (8, 8') contains as fillers carbon black, metals, substances containing metal, boron nitride, boron carbide and/or silicon carbide.

9. Pneumatic vehicle tyre according to at least one of the preceding claims, **characterised in that** the thermally more conductive rubber mixture (8, 8') contains more carbon black as a filler than the rubber mixture surrounding it.

10. Pneumatic vehicle tyre according to at least one of the preceding claims, **characterised in that** the thermally more conductive rubber mixture (8, 8') contains at least 5 phr more zinc oxide than the rubber mixture surrounding it.

11. Pneumatic vehicle tyre according to at least one of the preceding claims, **characterised in that** the thermally more conductive rubber mixture (8, 8') contains anti-oxidant with good thermal protection.

12. Pneumatic vehicle tyre according to claim 1, **characterised in that** the thermally more conductive rubber mixture (8') is arranged at least in the region of at least one tyre shoulder, is at least partially connected to the belt reinforcement (6') situated below the tread strip (5'), does not come into contact with the roadway and extends in an axial direction, possibly up to the axially outer boundary of the tyre body, and **in that** the axially outer surface of the tyre body is enlarged in the region in which the thermally more conductive rubber mixture (8') extends in an axial direction.


**Revendications**

1. Pneumatique de véhicule, en particulier pour des véhicules utilitaires, comprenant :

   - une couche intérieure imperméable à l'air,
   - une carcasse caoutchoutée contenant des nappes de renfort, laquelle carcasse s'étend de la zone du sommet d'un pneumatique de véhicule jusqu'à la zone du talon, via les flancs, et est ancrée dans la zone du talon par enroulement de tringles résistant à la traction,
   - une bande de roulement en caoutchouc présentant des rainures de sculpture se trouvant à l'extérieur dans le sens radial,
   - un renfort de ceinture comprenant au moins une nappe d'armature se trouvant entre la bande de roulement en caoutchouc et la carcasse, laquelle nappe d'armature comprend des nappes de renfort caoutchoutées,
   - et d'autres parties constitutives habituelles telles que, par exemple, des bandages,

   **caractérisé**

**en ce qu'**un mélange de caoutchouc (8) est disposé pratiquement seulement à proximité immédiate du fond (7) de la rainure de sculpture et des parties voisines des flancs de rainure (10) d'au moins une rainure de sculpture (4), lequel mélange de caoutchouc remplit pratiquement au moins l'espace compris entre le fond (7) de la rainure de sculpture (4) et la couche extérieure (9), dans le sens radial, du renfort de ceinture (6), où le mélange de caoutchouc (8), lorsque le pneumatique (1) du véhicule est à l'état neuf, n'est pas en contact avec la chaussée, mélange de caoutchouc dont la conductivité thermique est d'au moins 5 % supérieure à la conductivité thermique du mélange de caoutchouc de la bande de roulement (5) entourant ce mélange de caoutchouc à conductivité thermique supérieure,

et / ou un mélange de caoutchouc (8') est disposé dans la zone d'au moins un épaulement du pneumatique, lequel mélange de caoutchouc est en liaison, au moins partiellement, avec le renfort de ceinture (6') se trouvant au-dessous de la bande de roulement (5'), n'est pas en contact avec la chaussée et s'étend dans le sens axial, le cas échéant jusqu'à la délimitation extérieure - dans le sens axial - du corps du pneumatique, où la conductivité thermique du mélange de caoutchouc (8') est supérieure d'au moins 5 % à la conductivité thermique des mélanges de caoutchouc de base entourant le mélange de caoutchouc à conductivité thermique supérieure.

2. Pneumatique de véhicule selon la revendication 1, **caractérisé en ce que** le mélange de caoutchouc (8) à conductivité thermique supérieure est disposé au moins pratiquement seulement à proximité immédiate du fond (7) de la rainure de sculpture et des parties voisines des flancs de rainure (10) d'au moins une rainure de sculpture (4), et la rainure de sculpture (4), à proximité de laquelle est placé le mélange de caoutchouc (8) à conductivité thermique supérieure, est une rainure circonférentielle.

3. Pneumatique de véhicule selon la revendication 1 et / ou 2, **caractérisé en ce que** les mélanges de caoutchouc (8) à conductivité thermique supérieure sont disposés à proximité des deux rainures circonférentielles les plus proches de l'épaulement.

4. Pneumatique de véhicule selon au moins l'une quelconque des revendications précédentes, **caractérisé en ce que** le mélange de caoutchouc (8) à conductivité thermique supérieure s'étend vers l'extérieur dans le sens radial, sur une étendue comprise entre 5 % et 95 % de la profondeur totale de la rainure de sculpture (4), en partant du fond (7) de la rainure de sculpture, lorsque le pneumatique est neuf.

5. Pneumatique de véhicule selon au moins l'une quelconque des revendications précédentes, **caractérisé en ce que** l'espacement entre le fond (7) de la rainure de sculpture (4) et la nappe d'armature extérieure (9), dans le sens radial, est compris entre 2 mm et 6 mm.

6. Pneumatique de véhicule selon au moins l'une quelconque des revendications précédentes, **caractérisé en ce que** le mélange de caoutchouc (8, 8') à conductivité thermique supérieure présente une conductivité thermique environ de 20 % supérieure à la conductivité thermique du mélange de caoutchouc de base entourant ce mélange de caoutchouc à conductivité thermique supérieure.

7. Pneumatique de véhicule selon au moins l'une quelconque des revendications précédentes, **caractérisé en ce que** le mélange de caoutchouc (8, 8') à conductivité thermique supérieure présente une dureté supérieure à la dureté du mélange de caoutchouc de base entourant ce mélange de caoutchouc à conductivité thermique supérieure.

8. Pneumatique de véhicule selon au moins l'une quelconque des revendications précédentes, **caractérisé en ce que** le mélange de caoutchouc (8, 8') à conductivité thermique supérieure contient, comme charges, du noir de carbone, des métaux, des substances contenant un métal, du nitrure de bore, du carbure de bore et / ou du carbure de silicium.

9. Pneumatique de véhicule selon au moins l'une quelconque des revendications précédentes, **caractérisé en ce que** le mélange de caoutchouc (8, 8') à conductivité thermique supérieure contient, comme charge, plus de noir de carbone que le mélange de caoutchouc de base entourant ce mélange de caoutchouc à conductivité thermique supérieure.

10. Pneumatique de véhicule selon au moins l'une quelconque des revendications précédentes, **caractérisé en ce que** le mélange de caoutchouc (8, 8') à conductivité thermique supérieure contient au moins 5 phr d'oxyde de zinc en plus que le mélange de caoutchouc de base entourant ce mélange de caoutchouc à conductivité thermique supérieure.

**11.** Pneumatique de véhicule selon au moins l'une quelconque des revendications précédentes, **caractérisé en ce que** le mélange de caoutchouc (8, 8') à conductivité thermique supérieure contient un agent de protection contre le vieillissement assurant une bonne protection contre la chaleur.

**12.** Pneumatique de véhicule selon la revendication 1, **caractérisé en ce que** le mélange de caoutchouc (8') à conductivité thermique supérieure est disposé au moins dans la zone d'au moins un épaulement du pneumatique, est en relation au moins partiellement avec le renfort de ceinture (6') se trouvant au-dessous de la bande roulement (5'), ne vient pas en contact avec la chaussée et s'étend dans le sens axial, le cas échéant jusqu'à la délimitation extérieure - dans le sens axial - du corps du pneumatique, et **en ce que** la surface extérieure - dans le sens axial - du corps du pneumatique, dans laquelle le mélange de caoutchouc (8') à conductivité thermique supérieure s'étend dans le sens axial, est augmentée.

FIG. 1

FIG. 2

FIG. 3